**Europäisches Patentamt**

**European Patent Office**

**Office européen des brevets**

(19)

(11) Veröffentlichungsnummer: **0 076 531**
**B1**

(12)

# EUROPÄISCHE PATENTSCHRIFT

(45) Veröffentlichungstag der Patentschrift:
**12.09.84**

(51) Int. Cl.³: **B 29 F 1/00**, B 29 F 1/14

(21) Anmeldenummer: **82201132.6**

(22) Anmeldetag: **13.09.82**

(54) Vorrichtung und Verfahren zur Herstellung von dünnwandigen Wachsmodellen für Feinguss.

(30) Priorität: **01.10.81 CH 6326/81**

(43) Veröffentlichungstag der Anmeldung:
**13.04.83 Patentblatt 83/15**

(45) Bekanntmachung des Hinweises auf die Patenterteilung:
**12.09.84 Patentblatt 84/37**

(84) Benannte Vertragsstaaten:
**AT BE CH DE FR GB IT LI NL SE**

(56) Entgegenhaltungen:
**CH - A - 343 121**
**DE - A - 2 202 061**
**FR - A - 1 526 950**
**FR - A - 2 189 199**
**GB - A - 705 314**
**US - A - 3 591 898**

**JAPAN PLASTICS AGE, Band 11, Nr. 10, Oktober 1973, Seiten 41-48, Tokyo, JP. J. KURODA: "Mold designing and construction for automation and high cycle molding"**

(73) Patentinhaber: **BBC Aktiengesellschaft Brown, Boveri & Cie., Haselstrasse, CH-5401 Baden (CH)**

(72) Erfinder: **Brugger, Manfred, Dolderweg 596, CH-5413 Birmenstorf (CH)**
Erfinder: **Vogt, Peter, Trottackerstrasse 7, CH-5507 Mellingen (CH)**

## Beschreibung

Die Erfindung bezieht sich auf eine mehrteilige Vorrichtung zur Herstellung von dünnwandigen Wachsmodellen, enthaltend eine untere Abschlussplatte mit einer Anordnung von ersten Kernen, und einer oberen Abschlussplatte mit einer Anordnung von zweiten Kernen, und einem seitlich angeordneten Mantel zum Umfassen des herzustellenden Wachsmodelles.

Eine derartige Vorrichtung ist bekannt.

Die für die Fertigung von Feinguss benötigten Wachsmodelle werden in mehrteiligen Vorrichtungen, den sogenannten Matrizen oder Werkzeugen hergestellt. Diese bestehen in der Regel aus warmfesten Stahllegierungen.

Nach dem Erstarren des Wachsmodelles in dem Werkzeug muss es aus diesem entfernt werden. Dieser Vorgang bildet die kritischste Phase im gesamten Herstellungsprozess, weil das Oberflächen-Volumen-Verhältnis des Wachsmodelles extrem gross ist und demzufolge das Wachsmodell stark an den Kernwänden des Werkzeuges haftet. Da die Formgebung des Wachsmodells über die Flüssig-Fest-Phase oder unter Umgehung der Flüssig-Phase im teigigen Zustand bei Temperaturen unterhalb der Liquidustemperatur erfolgt, ist mit höheren Kontraktionswerten des Wachses und mit entsprechend grösserer Adhäsion des Wachses an den Kernwänden zu rechnen.

Hinzu kommt weiterhin, dass der Werkstoff Wachs spröde ist und eine geringe Eigenfestigkeit aufweist. Beim Öffnen des Werkzeuges entstehen Zugspannungen im erstarrten Wachs und es besteht daher Gefahr von Rissbildung, selbst wenn die Wände der kernanordnungen des Werkzeuges mit Anzug versehen sind.

Eine Einrichtung zum Entfernen von geformten Gegenständen aus einem formenden Gehäuse ist aus CH-PS 548240 bekannt. Hierbei wird mittels einer membranartigen druckluftbetätigten gummielastischen Scheibe, ein aus gepresstem Sand bestehender Kern für die Herstellung von hohlen Gussstücken aus einem formenden Gehäuse entfernt.

Diese Einrichtung ist geeignet für Sandguss, bei dem das Oberflächen-Volumen-Verhältnis der geformten Gegenstände vergleichsweise geringer ist als bei gegossenen Wachsmodellen, und ausserdem sind die Anforderungen, die an die Operation des Abtrennens des geformten Gegenstandes vom formenden Gehäuse gestellt werden, bei Sandguss bei weitem nicht so gross wie bei der Formgebung von dünnwandigen Wachsmodellen in einem Werkzeug.

Die zerstörungsfreie Abtrennung erstarrter dünnwandiger Wachsmodelle von den Wänden der Kernanordnungen ist demnach wesentlich problematischer als bei Sandguss und ist mit den in der Giessereiindustrie derzeit bekannten Einrichtungen nur unzulänglich durchführbar.

Hier will die Erfindung Abhilfe schaffen.

Die Erfindung, wie sie in den Ansprüchen gekennzeichnet ist, löst die Aufgabe, eine Vorrichtung und ein Verfahren zu schaffen, wodurch Wachsmodelle für Feinguss unter allgemeinen Produktionsbedingungen reproduzierbar, in qualitativ einwandfreiem Zustand und wirtschaftlich hergestellt werden können, indem zur Erzeugung des Losbrechmomentes zwischen dem Wachsmodell und den Kernwänden, sowohl in den Trennflächen zwischen dem Mantel und der unteren Abschlussplatte als auch in den Trennflächen zwischen dem Mantel und der oberen Abschlussplatte, und zwar in den Trennflächen des Mantels und/oder der Abschlussplatten, jeweils mindestens drei Federn angeordnet sind, die durch die jeweiligen gegenüberliegenden Trennflächen in die eigenen Trennflächen einpressbar sind, so dass sie auf die gegenüberliegenden Trennflächen einen Druck ausüben können, wodurch gleichzeitig und sprungartig, sowohl in den Trennflächen zwischen dem Mantel und der unteren Abschlussplatte als auch in den Trennflächen zwischen dem Mantel und der oberen Abschlussplatte eine abstossende Kraft erreicht werden kann.

Diese Vorrichtung weist folgenden Vorteil auf:
— Es wird ein gleichzeitiges spielfrei arbeitendes und axial gegenseitiges Abziehen der ersten und der zweiten Kernanordnung vom Wachsmodell erreicht.

Aufgrund des gleichzeitigen sprungartigen und axial gegenseitigen Abziehens des Wachsmodells von der ersten und der zweiten Kernanordnung wird ein hohes und auf alle Oberflächenteile des Wachsmodells gleichmässig wirkendes Losbrechmoment erzielt, wodurch Zerstörungen am Wachsmodell vermieden werden, was mit den derzeit bekannten pneumatischen oder hydraulischen Abzieheinrichtungen, die mit Spiel behaftet sind, nicht möglich ist.

Entsprechend Anspruch 2 sind die Federn in je einer Bohrung in den Trennflächen von Mantel und/oder unteren und oberen Abschlussplatte eingelassen und wirken auf je einen Abdrückbolzen.

Nach Anspruch 3 ist bei Entlastung der Federn der Weg der Federn insbesondere durch eine ringförmige Scheibe begrenzt, wodurch der Weg für jeden Bolzen gleich ist.

Die vorteilhafte Wirkung gemäss den Weiterbildungen nach den Ansprüchen 2 und 3 besteht darin, dass die sprungartig sich entlastende Federkraft symmetrisch und spielfrei direkt auf die Trennflächen von Mantel und/oder unterer und oberer Abschlussplatte wirkt, wodurch eine axiale Zentrierung beim Abziehen der Kernanordnungen nach entgegengesetzten Richtungen ermöglicht wird.

Gemäss Anspruch 4 sind die Federn Blattfedern, die in Ausnehmungen in den beiden Trennflächen von Mantel und/oder unteren und oberen Abschlussplatte eingelassen sind und die mit einem Teil der Blattfedern innerhalb der Ausnehmungen befestigt sind.

Durch die Anordnung der Blattfedern wird eine direkte Kraftübertragung auf die beiden Trennflächen des Mantels und/oder der unteren und oberen Abschlussplatte unter Umgehung des Abdrückbolzens erreicht.

Nach Anspruch 5 weisen die Wände der Kerne einen Anzug von höchstens 40′ auf. Mit dieser Grösse des Anzugs ist einmal die Massgenauigkeit des Feingusses gewährleistet, zum anderen wird das Abziehen der Kernanordnungen vom Wachsmodell begünstigt.

Entsprechend Anspruch 6 weisen die Federn eine Spannungs-Dehnungscharakteristik auf, die sich nicht mehr als ±5% unterscheidet.

Hierdurch wird die vorteilhafte Wirkung der Ausgestaltung gemäss Anspruch 2 und 3 noch verstärkt.

Beim erfindungsgemässen Verfahren zur Herstellung von Wachsmodellen gemäss Anspruch 7 werden die untere, die obere Abschlussplatte und der Mantel zusammengepresst, die Federn gespannt, in die freien Räume zwischen den Kernanordnungen nach vorheriger Evakuierung flüssiges Wachs eingebracht, und nach dem Erstarren des Wachses wird der äussere Druck auf die untere Abschlussplatte und die obere Abschlussplatte gleichzeitig gelöst, wodurch sprungartig die Federn sowohl in den Trennflächen zwischen dem Mantel und der unteren Abschlussplatte als auch in den Trennflächen zwischen dem Mantel und der oberen Abschlussplatte, die untere Abschlussplatte mit der ersten Kernanordnung und die obere Abschlussplatte mit der zweiten Kernanordnung von dem Mantel trennen und damit auch automatisch das Wachsmodell, durch gleichzeitige und sprungartige Überwindung der Adhäsion des Wachsmodells zu den Wänden der Kernanordnungen, von den Kernanordnungen trennen, und die beiden Kernanordnungen und der Mantel relativ zueinander in axialer Richtung gegenseitig voneinander wegtransportiert werden, so dass das Wachsmodell frei wird.

Die Erfindung wird nachstehend anhand von in der Zeichnung dargestellten Ausführungsbeispielen erläutert.

In der Zeichnung zeigt:

Fig. 1 einen axialen Schnitt durch einen ringförmigen Mantel sowie durch eine untere und eine obere Abschlussplatte einschliesslich der jeweiligen Kernanordnungen und das Wachsmodell, wobei die erfindungsgemässe Vorrichtung sich in teilweise geöffnetem Zustand befindet

Fig. 2 einen Schnitt II-II gemäss Fig. 1 senkrecht zur Achse durch die obere Abschlussplatte

Fig. 3 einen Schnitt III-III gemäss Fig. 1 senkrecht zur Achse durch den ringförmigen Mantel sowie durch die zweite Kernanordnung und das Wachsmodell

Fig. 4 eine Vorderansicht der erfindungsgemässen Vorrichtung im geschlossenen Zustand, wobei die für die Funktionsweise erforderlichen Hilfsmittel vereinfacht schematisch dargestellt sind

Fig. 5 einen vergrösserten teilweisen Schnitt einer beispielsweisen Ausführungsform durch einen Abdrückbolzen und eine Schraubenfeder

Fig. 6 einen vergrösserten Schnitt einer weiteren beispielsweisen Ausführungsform durch eine Blattfeder.

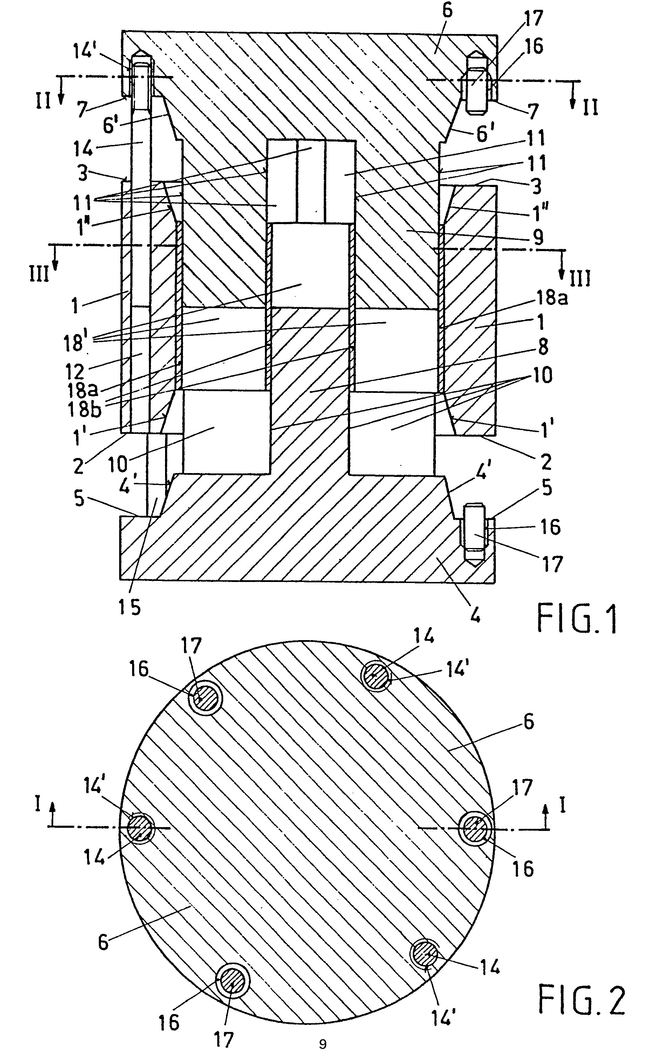

In Fig. 1 ist ein axialer Schnitt durch einen ringförmigen Mantel 1 sowie durch eine untere und eine obere Abschlussplatte, einschliesslich der jeweiligen Kernanordnungen und das Wachsmodell der erfindungsgemässen Vorrichtung in teilweise geöffnetem Zustand dargestellt.

Der ringförmige Mantel 1 weist eine untere Trennfläche 2 und eine obere Trennfläche 3 auf. Die Enden des ringförmigen Mantels 1 sind konisch ausgebildet, wobei die untere konische Fläche mit 1′ und die obere konische Fläche mit 1″ bezeichnet sind. Entsprechend dazu weisen sowohl die untere Abschlussplatte 4 eine Trennfläche 5 und eine konische Fläche 4′, als auch die obere Abschlussplatte 6 eine Trennfläche 7 und eine konische Fläche 6′ auf. Die Trennflächen 2 und 3 des ringförmigen Mantels 1 und die Trennflächen 5 und 7 der unteren 4 und der oberen Abschlussplatte 6 sind planparallel ausgestaltet und liegen im Fall, wenn die drei Teile 1, 4 und 6 der Vorrichtung geschlossen sind, unmittelbar aufeinander auf. Ebenso sind die konische Fläche 1′ des ringförmigen Mantels 1 und die konische Fläche 4′ der unteren Abschlussplatte 4 und die konische Fläche 1″ des ringförmigen Mantels 1 und die konische Fläche 6′ der oberen Abschlussplatte 6 jeweils planparallel ausgebildet und liegen ebenfalls, wenn die drei Teile 1, 4 und 6 der Vorrichtung geschlossen sind, unmittelbar aufeinander auf. Die konische Fläche 1′, 1″, 4′ und 6′ gewährleistet eine koaxiale Zentrierung des ringförmigen Mantels 1 mit der unteren 4 und oberen Abschlussplatte 6 bei geschlossener Vorrichtung.

In der beispielsweisen Ausführungsform gemäss Fig. 1 sind die untere Abschlussplatte 4 mit einer ersten Kernanordnung 8 und die obere Abschlussplatte 6 mit einer zweiten Kernanordnung 9 jeweils einstückig ausgebildet, so dass die beiden Kernanordnungen 8, 9 im geschlossenen Zustand der Vorrichtung ebenfalls gegenseitig zentriert sind. Sowohl der ringförmige Mantel 1 als auch die untere 4 und obere Abschlussplatte 6 mit den jeweiligen Kernanordnungen 8, 9 bestehen aus einer warmfesten Stahllegierung.

In der Schnittdarstellung der Fig. 1 erscheinen die Wände 10, 11 der Kernanordnungen 8, 9 zum Teil als Flächen und zum Teil als Geraden. Die Verjüngung der Kernwände 10, 11 von deren Basis an der unteren 4 bzw. an der oberen Abschlussplatte 6 bis hin zu deren Ende, ist, da der Anzug sehr gering ist und lediglich höchstens 40′ beträgt, nicht dargestellt. In Fig. 1 sind weiterhin im Schnitt das Wachsmodell 18 zu sehen. Die zylindrischen Flächen des Wachsmodelles 18a und 18b sind über deren gesamte axiale Länge durch Stege 18′ verbunden, die in Fig. 1 nur zum Teil zu sehen sind, da sie durch die Kernanordnungen 8, 9 teilweise verdeckt sind. Obwohl in Fig. 1 die Vorrichtung teilweise geöffnet ist, liegen die Wände 10, 11 der Kernanordnungen 8, 9 scheinbar immer noch an dem Wachsmodell 18a, b an. In Wirklichkeit liegt nur der äussere Umfang des Wachsmodells 18a, am ringförmigen Mantel 1 auf. Die Abstände zwischen den Wänden 10, 11 der Kernanordnungen 8, 9 und dem Wachsmodell 18a, b sind jedoch derart klein, dass man sie zeichnerisch nicht darstellen kann.

Im ringförmigen Mantel 1 sind mehrere Bohrungen 12 für obere Führungsstifte 14 und mehrere Bohrungen 13 für untere Führungsstifte 15 ausgebildet. In Fig. 1 ist nur eine Bohrung 12 und ein oberer Führungsstift 14 sowie ein Teil eines unteren Führungsstiftes 15 zu sehen. In den Trennflächen 5 und 7 der unteren 4 bzw. oberen Abschlussplatte 6 sind die federbelasteten Abdrückbolzen 17 angeordnet. Sie werden in abgestuften Bohrungen 16 gehalten, von denen in Fig. 1 nur jeweils ein Abdrückbolzen 17 und eine Bohrung 16 sichtbar ist. Der Abdrückbolzen 17 und die dazugehörigen Funktionsteile sind in Fig. 5 im einzelnen veranschaulicht.

In Fig. 2 sowie in den weiteren Figuren sind gleiche Funktionsteile mit den selben Bezugsziffern wie in Fig. 1 bezeichnet.

In Fig. 2 ist der Schnitt II-II aus Fig. 1 gezeigt. Es sind in einer beispielsweisen Ausführungsform die abgestuften Bohrungen 16 einschliesslich der Abdrückbolzen 17 gleichmässig über den Umfang verteilt und zwischen den Bohrungen 16 sind obere Führungsstifte 14 vorgesehen, die durch Gewinde 14' mit der oberen Abschlussplatte 6 verbunden sind.

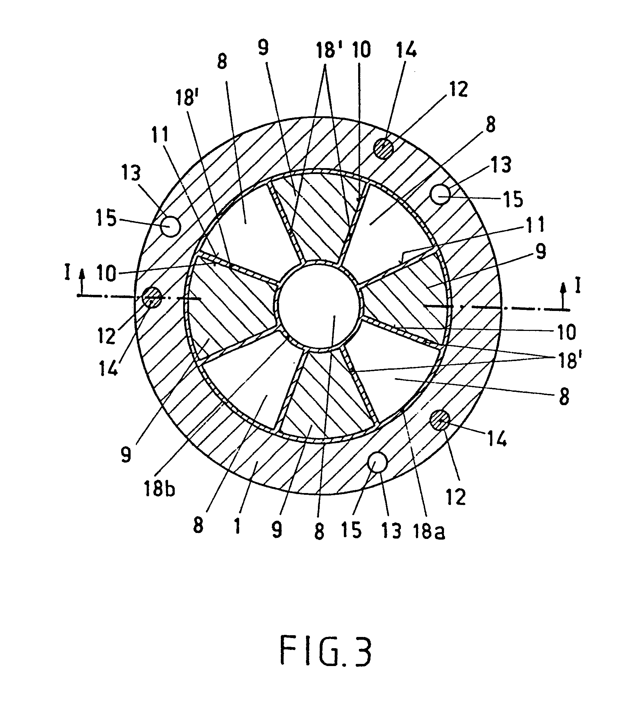

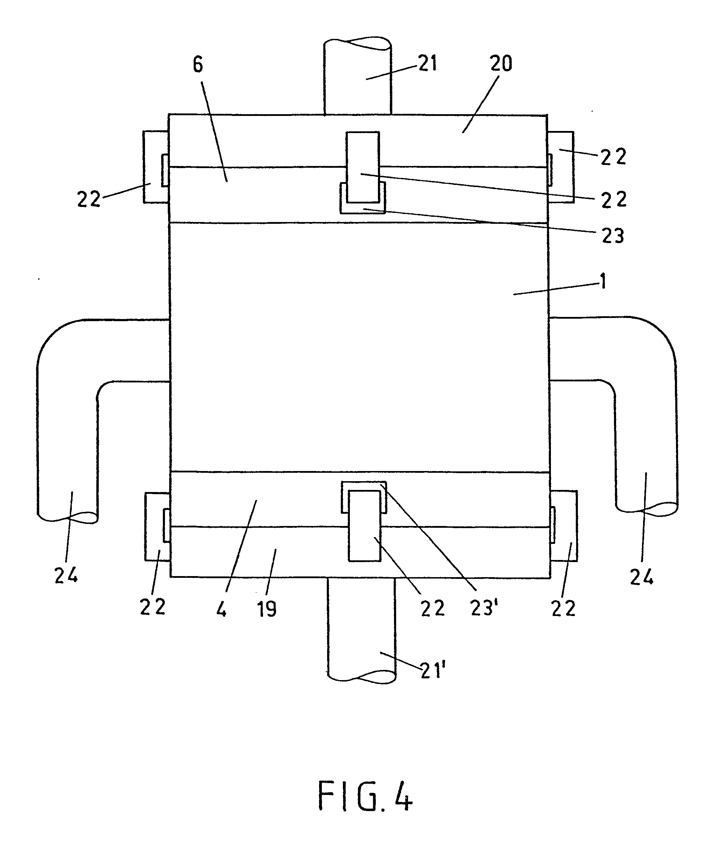

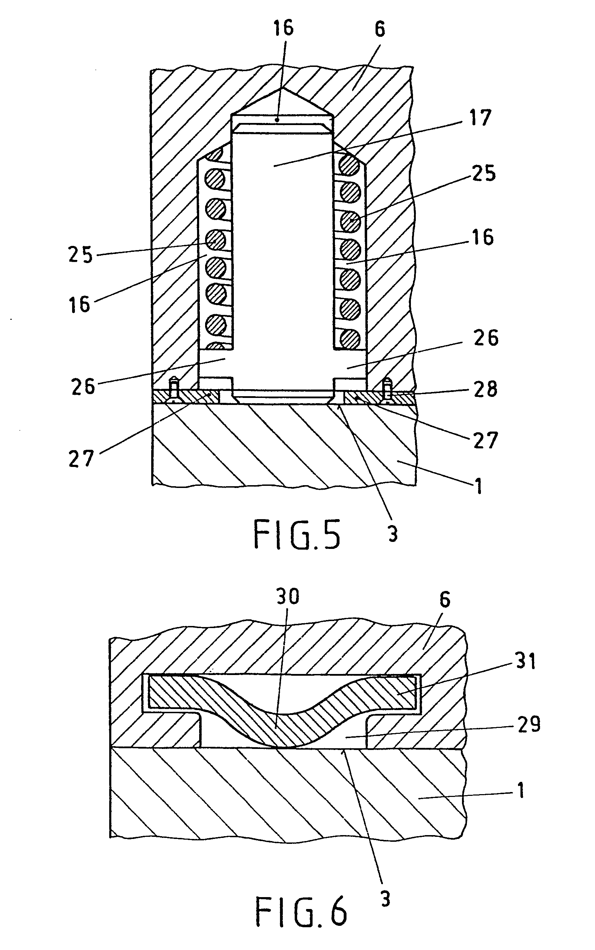

In Fig. 3 ist der Schnitt III-III aus Fig. 1 dargestellt, der die Anordnung und die geometrische Form des Wachsmodelles 18 in radialer Richtung zeigt. Das Wachsmodell 18 besteht in dieser beispielsweisen Ausführungsform aus zwei koaxialen Zylindern 18a, b, die gegenseitig durch Stege 18' verbunden sind. In Fig. 3 sind die Teile der oberen Kernanordnung 9, das Wachsmodell 18 sowie der ringförmige Mantel 1 geschnitten, während die Teile der unteren Kernanordnung 8 in Draufsicht gezeigt sind.

Die beispielsweise Ausführungsform der Kernanordnungen 8 bzw. 9 zeigt, dass der mittlere Teil Bestandteil der unteren Kernanordnung 8 ist. In der Schnittfläche des ringförmigen Mantels 1 ist gleichfalls die Verteilung, einmal die jeweils um 120° versetzten Bohrungen 12 einschliesslich des oberen Führungsstiftes 14 sowie die jeweils um 120° versetzten Bohrungen 12 einschliesslich des oberen Führungsstiftes 14 sowie die jeweils um 120° versetzten Bohrungen 13 einschliesslich der unteren Führungsstifte 15 zu sehen.

Fig. 4 zeigt eine beispielsweise Ausführungsform des Erfindungsgegenstandes, wobei auch die Press- 19, 20, 21, 21' und Halteelemente 22, 23, 23', 24 vereinfacht dargestellt sind. Die Vorrichtung ist mit einer unteren Pressplatte 19 auf dem unteren Pressstempel 21' abgestützt und wird über die obere Pressplatte 20 durch den Pressstempel 21 zusammengepresst. Die untere 19 und obere Pressplatte 20 werden sowohl von dem unteren Pressstempel 21' als auch von dem oberen Pressstempel 21 gehalten und geführt. Ausserdem sind Befestigungsstücke 22 vorgesehen, die die untere Pressplatte 19 und die untere Abschlussplatte 4 sowie die Pressplatte 20 mit der oberen Abschlussplatte 6 verbinden. Die Befestigungsstücke 22 sind hakenförmig ausgebildet und greifen in Ausnehmungen 23, 23' der oberen 6 und der unteren Abschlussplatte 4 ein. In Fig. 4 ist die Anordnung der mittleren vorderen Befestigungsstücke 22 in den Ausnehmungen 23, 23' besonders gut zu erkennen. Der ringförmige Mantel 1 wird von Halterungen 24 mit Spiel gehalten bzw. geführt, von denen wegen besserer Übersicht nur zwei dargestellt sind.

In Fig. 5 ist ein vergrösserter teilweiser Schnitt einer beispielsweisen Ausführungsform durch den federdrehbelasteten Abdrückbolzen 17 und einer Schraubenfeder dargestellt. Der Abdrückbolzen 17 ist in der abbgestuften Bohrung 16 angeordnet, wobei der kleinere Durchmesser der abgestuften Bohrung 16 demjenigen des Abdrückbolzens 17 entspricht, und der grössere Durchmesser der abgestuften Bohrung 16 durch den Aussendurchmesser der Schraubenfeder 25 festgelegt ist.

In Fig. 5 ist die Schraubenfeder 25 in zusammengepresster Lage gezeichnet. Sie stützt sich mit dem unteren Ende auf die ringförmige Erweiterung 26 des Abdrückbolzens 17 und drückt diesen gegen die Trennfläche 2 oder 3 des ringförmigen Mantels 1. Wird der Anpressdruck der Pressstempel 21, 21' an die untere 19 und obere Pressplatte 20 gelöst, bewegt sich der Abdrückbolzen 17 so lange aus der Bohrung 16 heraus, bis dessen ringförmige Begrenzung 26 an die Begrenzungsscheibe 27 anstösst, und er somit am Herausspringen gehindert wird. Die Begrenzungsscheibe 27 ist im vorliegenden Ausführungsbeispiel in die Trennfläche 7 der oberen Abschlussplatte 6 eingelassen und mit Schrauben 28 befestigt.

Eine weitere Variante von Federn ist in Fig. 6 dargestellt. In einer Ausnehmung 29 ist eine Blattfeder 30 eingelegt, die im vorliegenden Beispiel direkt die Trennfläche 3 des ringförmigen Mantels 1 berührt und dieselbe Funktion hat wie die in Fig. 5 beschriebene Feder. Die Blattfeder 30 wird an ihren Enden 31 in Erweiterungen der Ausnehmung 29 ohne Hilfsmittel gehalten.

Die Funktionsweise der erfindungsgemässen Vorrichtung wird nachstehend näher erläutert.

An sich bekannte, nicht zum unmittelbaren Verständnis der Funktionsweise erforderlichen Bestandteile, beispielsweise Wachseinspritzkanäle, sind in der Zeichnung weggelassen worden.

Die Vorrichtung ist betriebsbereit, wenn alle Funktionsteile so zusammengesetzt sind, wie es Fig. 4 zeigt. Die Abschlussplatten 4, 6 werden zwischen den Pressplatten 19, 20 auf den ringförmigen Mantel 1 hydraulisch gepresst, so dass die konischen Flächen 1', 1'', 4', 6' die Teile 1, 4, 6 sowie die untere 8 und obere Kernanordnung 9 gegenseitig zentrieren. Die Abdrückbolzen 17 sind durch den Zusammenbau der Vorrichtung in Bohrungen 16 oder die Blattfedern 30 in Ausnehmungen 29 eingeschoben und gespannt. Wie aus Fig. 5 ersichtlich ist, erfolgt das Spannen der Abdrückbolzen durch Schraubenfedern 25. Das Spannen der Blattfedern erfolgt gemäss Fig. 6 direkt durch die Trennflächen 2 und 3 des ringförmigen Mantels 1. Danach wird, zwischen den Wänden 10, 11 der unteren 8 und oberen Kernanordnung 9 flüssiges Wachs eingebracht. Nach dem Erstarren des Wachses wird der äussere Druck der Pressstempel 21, 21' auf die Pressplatten 19, 20 und auf die un-

tere 4 und obere Abschlussplatte 6 durch Ventilbetätigung auf Null abgebaut. Infolge der Inkompressibilität des Drucköles bricht der Druck unmittelbar zusammen, wodurch sprungartig die federbelasteten Abdrückbolzen 17 oder die Blattfedern 30 auf die Trennflächen 2 und 3 des ringförmigen Mantels 1 einwirken, so dass die untere- 4 und/ oder Abschlussplatte 6, samt den Kernanordnungen 8, 9 vom ringförmigen Mantel 1 und damit auch vom Wachsmodell 18, um einen Weg von ca. 3 mm getrennt werden. Dieser Weg entspricht dem Abstand vom unteren Teil der ringförmigen Erweiterung 26 des Abdrückbolzens 17 bis zur ringförmigen Begrenzungsscheibe 27 oder ist abhängig von der Charakteristik der Blattfeder 30. Die in entgegengesetzten Richtungen sprungartig sich entlastenden Federn 25, 30 erzeugen das Losbrechmoment, das erforderlich ist, um das infolge Adhäsion an den Wänden 10, 11 der Kernanordnungen 8, 9 anhaftende Wachsmodell 18, von diesen zu trennen. Zur Verringerung des Losbrechmomentes und um das Wachsmodell 18 vor Beschädigung zu schützen, weisen die Kernanordnungen 8, 9 einen Anzug von höchstens 40' auf. Das Wachsmodell 18 wird nach dem Lösen durch den ringförmigen Mantel 1 festgehalten.

Um die richtige Funktionsweise der Vorrichtung zu ermöglichen, wird der ringförmige Mantel 1 von den Halterungen 24 mit Spiel gehalten. Aus Gründen besserer Übersicht sind in Fig. 4 nur zwei Halterungen 24 gezeichnet.

Die Öffnungsfolge der Vorrichtung nach dem Erstarren des eingebrachten Wachses geschieht in nachstehend aufgeführten Schritten:

1. Erzeugung eines Losbrechmomentes gleichzeitig und sprungartig in axial entgegengesetzte Richtungen durch federbelastete Abdrückbolzen 17 bzw. direkt durch Blattfedern 30 in den oberen 3, 7 und unteren Trennflächen 2, 5 der Vorrichtung und dadurch Trennung der unteren 4 und oberen Abschlussplatte 6 von dem Mantel 1 und der Wände 10, 11 der Kernanordnungen 8, 9 vom Wachsmodell 18, 18' um ca. 3 mm.

2. Ausziehen der oberen Kernanordnung 9, wobei das Wachsmodell 18, 18' durch den ringförmigen Mantel 1 gehalten wird.

3. Abziehen des ringförmigen Mantels 1 einschliesslich des Wachsmodelles 18, 18' von der feststehenden unteren Kernanordnung 8.

4. Die Schritte 2 und 3 können durch mechanische und hydraulische Zusatzeinrichtungen kombiniert werden. Das Abziehen des ringförmigen Mantels 1 erfolgt dabei z.B. mit der halben Geschwindigkeit, mit welcher die obere Kernanordnung 9 nach oben weggezogen wird.

## Patentansprüche

1. Mehrteilige Vorrichtung zur Herstellung von dünnwandigen Wachsmodellen (18), enthaltend eine untere Abschlussplatte (4) mit einer Anordnung von ersten Kernen (8), und einer oberen Abschlussplatte (6) mit einer Anordnung von zweiten Kernen (9), und einem seitlich angeordneten Mantel (1) zum Umfassen des herzustellenden Wachsmodelles (18), dadurch gekennzeichnet, dass zur Erzeugung des Losbrechmomentes zwischen dem Wachsmodell (18) und den Kernwänden (10, 11), sowohl in den Trennflächen (2, 5) zwischen dem Mantel (1) und der unteren Abschlussplatte (4) als auch in den Trennflächen (3, 7) zwischen dem Mantel (1) und der oberen Abschlussplatte (6), und zwar in den Trennflächen des Mantels (2, 3) und/oder der Abschlussplatten (5, 7), jeweils mindestens drei Federn (25, 30) angeordnet sind, die durch die jeweiligen gegenüberliegenden Trennflächen (2, 3, 5, 7) in die eigenen Trennflächen (2, 3, 5, 7) einpressbar sind, so dass sie auf die gegenüberliegenden Trennflächen (2, 3, 5, 7) einen Druck ausüben können, wodurch gleichzeitig und sprungartig sowohl in den Trennflächen (2, 5) zwischen dem Mantel (1) und der unteren Abschlussplatte (4) als auch in den Trennflächen (3, 7) zwischen dem Mantel (1) und der oberen Abschlussplatte (6) eine abstossende Kraft erreicht werden kann.

2. Vorrichtung nach Anspruch 1, dadurch gekennzeichnet, dass die Federn (25) in je einer Bohrung (16) in den Trennflächen (2, 3, 5, 7) von Mantel (1) und/oder unteren- (4) und oberen Abschlussplatte (6) eingelassen sind und auf je einen Abdrückbolzen (17) wirken, welche Bohrungen gleichmässig über den Umfang des Mantels bzw. der mit dem Mantel zusammenwirkenden Flächen der unteren (4) und oberen Abschlussplatte (6) verteilt sind.

3. Vorrichtung nach einem der Ansprüche 1 und 2, dadurch gekennzeichnet, dass bei Entlastung der Federn (25) der Weg der Federn (25) insbesondere durch eine ringförmige Scheibe (27) auf gleichen Federweg für jeden Bolzen (17) begrenzt ist.

4. Vorrichtung nach Anspruch 1, dadurch gekennzeichnet, dass die Federn Blattfedern (30) sind, die in Ausnehmungen (29) in den Trennflächen (2, 3, 5, 7) von Mantel (1) und/oder unteren (4) und oberen Abschlussplatten (6) eingelassen sind und die mit einem Teil (31) der Blattfedern (30) innerhalb der Ausnehmungen (29) befestigt sind.

5. Vorrichtung nach einem der Ansprüche 1 bis 4, dadurch gekennzeichnet, dass die Wände (10, 11) der Kerne (8, 9) ein Anzug von höchstens 40' aufweisen.

6. Vorrichtung nach einem der Ansprüche 1 bis 5, dadurch gekennzeichnet, dass die Federn (25, 30) eine Spannungs-Dehnungscharakteristik aufweisen, die sich im Bereich des vorgegebenen Federweges nicht mehr als ± 5% unterscheidet.

7. Verfahren zur Herstellung von Wachsmodellen (18) unter Verwendung einer Vorrichtung nach wenigstens einem der Ansprüche 1 bis 6, dadurch gekennzeichnet, dass die untere- (4), die obere Abschlussplatte (6) und der Mantel (1) zusammengepresst, die Federn (25, 30) auf diese Weise gespannt werden, in die freien Räume zwischen den Kernanordnungen (8, 9) nach vorheriger Evakuierung flüssiges Wachs eingebracht wird, und nach dem Erstarren des Wachses der äussere Druck auf die untere Abschlussplatte (4) und die obere Abschlussplatte (6) gleichzeitig gelöst wird, wodurch sprungartig die Federn (25, 30), sowohl in den Trennflächen (2, 5) zwischen dem Mantel (1) und der unteren Abschlussplatte (4) als auch in den Trennflächen (3, 7) zwischen dem Mantel (1) und der oberen Abschlussplatte (6), die untere Abschlussplatte mit der ersten Kernanordnung (8) und die obere Abschlussplatte (6) mit der zweiten Kernanordnung (9) von dem Mantel (1) trennen und damit auch automatisch das Wachsmodell (18) durch gleichzeitige und sprungartige Überwindung der Adhäsion des Wachsmodelles (18) zu den Wänden (10, 11) der Kernanordnung (8, 9), von den Kernanordnungen (8, 9) um jeweils maximal 3 mm axial in entgegengesetzten Richtungen voneinander trennen, und die beiden Kernanordnungen (8, 9) und der Mantel (1) relativ zueinander in axialer Richtung gegenseitig voneinander wegtransportiert werden, so dass das Wachsmodell (18) frei wird.

## Revendications

1. Dispositif en plusieurs parties pour fabriquer des modèles en cire (18) à paroi mince, comportant une plaque d'extrémité inférieure (4) avec un ensemble de premiers noyaux (8) et une plaque d'extrémité supérieure (6) avec un ensemble de seconds noyaux (9) ainsi qu'un fût latéral (1) pour entourer le modèle en cire (18) à fabriquer, caractérisé en ce que, pour produire le moment de décollement entre le modèle en cire (18) et les parois de noyaux (10, 11), à la fois dans les surfaces de séparation (2, 5) entre le fût (1) et la plaque d'extrémité inférieure (4), dans les surfaces de séparation (3, 7) entre le fût (1) et la plaque d'extrémité supérieure (6) et dans les surfaces de séparation entre le fût (2, 3) et/ou les plaques d'extrémité (5, 7), on installe chaque fois au moins trois ressorts (25, 30) qui peuvent être comprimés par les surfaces de séparation (2, 3, 5, 7) respectives opposées dans les surfaces de séparation (2, 3, 5, 7) propres, de manière à pouvoir exercer, sur les surfaces de séparation (2, 3, 5, 7) opposées, une pression au moyen de laquelle on puisse obtenir simultanément et brusquement une force répulsive, à la fois dans les surfaces de séparation (2, 5) entre le fût (1) et la plaque d'extrémité inférieure (4) et dans les surfaces de séparation (3, 7) entre le fût (1) et la plaque d'extrémité supérieure (6).

2. Dispositif suivant la revendication 1, caractérisé en ce que les ressorts (25) sont chacun montés dans une forure (16) dans les surfaces de séparation (2, 3, 5, 7) du fût (1) et/ou de la plaque d'extrémité inférieure (4) et supérieure (6) et agissent chacun sur un téton répulsif (17), ces forures étant réparties uniformément sur la périphérie du fût ou des surfaces des plaques d'extrémité inférieure (4) et supérieure (6) qui coopèrent avec le fût.

3. Dispositif suivant l'une ou l'autre des revendications 1 ou 2, caractérisé en ce que, lorsque les ressorts (25) ne sont pas en charge, leur extension est limitée en particulier par une rondelle annulaire (27) de telle sorte que les courses élastiques des tétons (17) soient égales.

4. Dispositif suivant la revendication 1, caractérisé en ce que les ressorts sont des lames de ressort (30) qui sont logées dans des évidements (29) prévus dans les surfaces de séparation (2, 3, 5, 7) du fût (1) et/ou des plaques d'extrémité inférieure (4) et supérieure (6) et qui sont fixées par une de leurs parties (31) à l'intérieur des évidements (29).

5. Dispositif suivant l'une quelconque des revendications 1 à 4, caractérisé en ce que les parois (10, 11) des noyaux (8, 9) présentent une dépouille au maximum de 40'.

6. Dispositif suivant l'une quelconque des revendications 1 à 5, caractérisé en ce que les ressorts (25, 30) présentent une caractéristique de tension-allongement qui, dans le domaine de la course élastique préétablie, ne se différencie pas de plus de $\pm$ 5%.

7. Procédé pour fabriquer des modèles en cire (18) à l'aide d'un dispositif suivant l'une quelconque des revendications 1 à 6, caractérisé en ce qu'on presse les uns contre les autres la plaque d'extrémité inférieure (4), la plaque d'extrémité supérieure (6) et le fût (1), on met de cette façon les ressorts (25, 30) sous sollicitation, on introduit de la cire liquide dans les espaces libres entre les ensembles de noyaux (8, 9) après y avoir fait le vide au préalable et après solidification de la cire, on relâche simultanément la pression externe exercée sur la plaque d'extrémité inférieure (4) et sur la plaque d'extrémité supérieure (6), à la suite de quoi les ressorts séparent brusquement, à la fois dans les surfaces de séparation (2, 5) entre le fût (1) et la plaque d'extrémité inférieure (4) et dans les surfaces de séparation (3, 7) entre le fût (1) et la plaque d'extrémité supérieure (6), la plaque d'extrémité inférieure avec le premier ensemble de noyaux (8) et la plaque d'extrémité supérieure (6) avec le second ensemble de noyaux (9) du fût (1) et de ce fait aussi automatiquement le modèle en cire (18) des ensembles de noyaux (8, 9), en surmontant simultanément et brusquement l'adhérence du modèle en cire (18) aux parois (10, 11) des ensembles de noyaux (8, 9), chaque fois au maximum de 3 mm axialement dans des directions opposées, et les deux ensembles de noyaux (8, 9) ainsi que le fût (1) sont écartés les uns des autres axialement en sens opposés, de sorte que le modèle en cire (18) est libéré.

## Claims

1. Multi-part device for producing thin-walled wax models (18), containing a bottom closure plate (4) having an arrangement of first cores (8), and a top closure plate (6) having an arrangement of second cores (9), and a laterally disposed wall (1) for enclosing the wax model (18) which is to be produced, characterised in that for the generation of the break-free moment between the wax model (18) and the core walls (10, 11) there are provided both in the dividing surfaces (2, 5) between the wall (1) and the bottom closure plate (4) and in the dividing surfaces (3, 7) between the wall (1) and the top closure plate (6) — namely in the dividing surfaces of the wall (2, 3) and/or of the closure plates (5, 7) — in each case at least three springs (25, 30) which are adapted to be pressed by the respective opposite dividing surfaces (2, 3, 5, 7) into the appertaining dividing surfaces (2, 3, 5, 7), so that they can apply a pressure to the opposite dividing surfaces (2, 3, 5, 7), whereby a repelling force can be obtained simultaneously and abruptly both in the dividing surfaces (2, 5) between the wall (1) and the bottom closure plate (4) and in the dividing surfaces (3, 7) between the wall (1) and the top closure plate (6).

2. Device according to Claim 1, characterised in that the springs (25) are each inserted into a bore (16) in the dividing surfaces (2, 3, 5, 7) of the wall (1) and/or of the bottom closure plate (4) and upper closure plate (6) and each act on a press-off pin (17), the said bores being uniformly distributed over the periphery of the wall or of the surfaces of the bottom closure plate (4) and top closure plate (6) which cooperate with the wall.

3. Device according to one of Claims 1 and 2, characterised in that when the springs (25) are relieved of load the path of the springs (25) is limited in particular by an annular disc (27) to the same spring path for each pin (17).

4. Device according to Claim 1, characterised in that the springs are leaf springs (30) which are inserted into recesses (29) in the dividing surfaces (2, 3, 5, 7) of the wall (1) and/or the bottom closure plate (4) or top closure plate (6), and which are fastened by a part (31) of the leaf springs (30) inside the recesses (29).

5. Device according ton one of Claims 1 to 4, characterised in that the walls (10, 11) of the cores (8, 9) have a slope of at most 40'.

6. Device according to one of Claims 1 to 5, characterised in that the springs (25, 30) have a stress strain characteristic which in the range of the predetermined spring path differs by no more than ± 5%.

7. Method of producing wax models (18) by using a device according to at least one of Claims 1 to 6, characterised in that the bottom closure plate (4), the top closure plate (6), and the wall (1) are pressed together, the springs (25, 30) are in this way stressed, liquid wax is introduced into the free spaces between the core arrangements (8, 9) after previous evacuation, and, after the wax has solidified, the external pressure on the bottom closure plate (4) and the top closure plate (6) is released simultaneously, whereby the springs (25, 30) both in the dividing surfaces (2, 5) between the wall (1) and the bottom closure plate (4) and in the dividing surfaces (3, 7) between the wall (1) and the top closure plate (6) abruptly separate the bottom closure plate together with the first core arrangement (8) and the top closure plate (6) together with the second core arrangement (9) from the wall (1), and thus also automatically separate the wax model (18), by simultaneous abrupt overcoming of the adhesion of the wax model (18) to the walls (10, 11) of the core arrangements (8, 9), from the core arrangements (8, 9) by in each case a maximum of 3 mm axially in opposite directions to one another, and the two core arrangements (8, 9) and the wall (1) are carried away from one another in the axial direction relative to one another, so that the wax model (18) is freed.

0 076 531

FIG.1

FIG.2

FIG.3

FIG. 4

FIG.5

FIG.6